# EUROPEAN PATENT APPLICATION

(11) **EP 3 978 455 A1**
(43) Date of publication of application: **06.04.2022**
(21) Application number: 21198203.8
(22) Date of filing: 22.09.2021
(51) Int. Cl.: C04B 7/36

(54) **CONTROL OF VOLATILE PARTICLES IN CEMENT CLINKER MANUFACTURING PROCESSES**

(30) Priority: 30.09.2020 ES 202030985
(71) Applicant: Cogcem Proyectos, S.L., 04700 El Ejido (ES)
(72) Inventor: BLASCO RASERO, JOSE ANTONIO, 04700 EL EJIDO (ALMERIA) (ES)
(74) Representative: Bartrina Diaz, José María

(57) **Abstract**

Reduction of the emission of volatile substances during direct operation in cement clinker manufacturing processes, by extracting or purging the volatile substances contained in gaseous streams (surplus from the outlet of the heat exchange tower that is not needed in the mills of crude oil in the case of having 2 crude mills) or adsorbed in solid streams (CKD of the heated end-of-line bag filter to evaporate the volatile substances adsorbed on it), managing to remove a portion of volatile substances from the recirculation process of cement processes: adsorption of volatile substances in crude oil (produced in the crude mill when gases laden with volatiles are mixed with the raw material that is ground) and subsequent volatilization (when the volatilities captured by the ground crude are mixed with hot gases from the kiln).

## Description

### OBJECT OF THE INVENTION

The object of this invention patent is to establish a method to decrease the emission of volatile compounds which are in a gas phase at a temperature between 140 and 190ºC, and are expelled to the atmosphere during periods in which the crude mill is stopped (direct running) at which point the process gases leave the atmosphere without passing through the crude mill at a temperature of around 180―190ºC, much higher than the temperature at which these gases are emitted when the crude mill is running (mixed running) around 140-150ºC and the gases pass through the mill.

During the mixed operation (which lasts around 75% of the total operating period of the cement clinker manufacturing kilns), two phenomena combine: on the one hand, a lower temperature of the gases due to the fact that they pass through the crude mill; and on the other hand, the fact that, in the crude mill, the gases are mixed with a large amount of raw material (wet limestone) which has a great capacity to retain acidic or water-soluble elements, which is why adsorption takes place on the particles of raw material that are grinding, of a large proportion of volatile elements: Hg, NH₃, HCI, IAI, Pb, Cd, and other volatile compounds (both organic and inorganic compounds (VOCs)). Under these conditions, emissions of volatile substances are lower than the limit values established by European legislation.

Despite this efficient purification of contaminants produced in the crude mill during mixed operation, period in which these compounds are not emitted to the outside through the chimneys of the cement process, these contaminants return back to the gas phase, reintroducing the volatile substances in the kiln together with the raw material that captured them in the crude mill, because the raw material is again subjected to high temperatures (>>350ºC) in the heat exchange tower in which these materials are introduced in order to be cooked. At these temperatures, the volatile elements return to the gas phase, giving rise to a recirculation process that leads to an increase in the concentration of these volatile compounds in the process gases.

This recirculation process: condensation and adsorption of volatile substances on the raw material introduced into the crude mill; desorption and volatilization of volatile compounds from the raw material when it is introduced into the kiln; it breaks during the so-called direct operation (25% of the operating time), at which time gases do not pass through the crude mill so outlet temperatures for the chimney are higher and there is an insufficient amount of adsorbent elements (wet limestone) to retain volatile substances accompanying the gases, thereby producing the emission of the volatile elements into the atmosphere, surpassing over these periods the emission limit values of these volatile substances established by the legislation.

In cement processes, there are other recirculation processes for chlorine compounds, which give rise to sticking that makes it necessary to stop operation to clean the ducts in which it accumulates. To solve these operational problems, the industry has developed systems for purging of chlorine compounds, consisting in the removal of gases at the inlet of the clinker manufacturing heat exchanger (gas direction) point at which the gases are highly concentrated in chlorine gas. These purges are called chlorine bypass, and it is the usual solution for installations in which the presence of chlorine from the raw materials or fuels used is very high. In other factories, where such facilities do not exist and have chlorine problems, the dust captured in the end-of-line filters is purged (Clinker kiln dust = CKD) with a significant concentration of chlorine, which is diverted to the cement mill, making it possible to reduce the concentration of chlorine accumulated in the process due to the recirculation process, a deviation that can be made as long as the amount of chlorine in the cement produced remains less than 2%. Otherwise, CKD becomes a problem that needs to be solved in some way, sending said material to spillways or looking for other solutions (treating this CKD as waste means losing valuable material, since it is ground limestone and partially calcined, which involves a cost that we are throwing to the spillway in case of not finding another solution to the chlorine purge through the CKD).

Since the chlorine bypass is an extraction at high temperatures (around 800-900ºC), these systems do not achieve the elimination of substances that volatilize at a lower temperature and that are not present in the places where this purge is carried out. On the contrary, the CKD purges suppose a decrease in the content of volatile substances accumulated in the recirculation processes and to some extent alleviate the emissions of volatile substances during the direct operation of the kiln. However, on many occasions, cement is not capable of admitting the CKD necessary to significantly lower the concentration of accumulated volatile substances in recirculation processes and it is necessary to find other solutions to comply with the emission limit values at all times and not only during the mixed operation of the processes.

### BACKGROUND OF THE INVENTION

Cement plants are facilities of recognized solvency, with technology constantly evolving, particularly from the middle of the twentieth century, basically focusing on problems arising from the production of cement clinker, an element considered strategic, especially in developing countries, but also for developed countries, as the concrete structures built do not have an infinite service life and will need renovating.

In recent years, at the European level, comprehensive cement production plants have adapted to reduce costs, mainly using alternative fuels derived from waste. This adaptation has been possible thanks to the innate conditions of the cement process: high temperatures and residence times, oxidizing atmosphere, alkaline environment; as well as an intense investment program to adapt facilities and processes. However, the economic crisis has hit the sector hard, especially in Europe, where the level of infrastructure built is high, so that cement sales have fallen considerably, many of the plants installed not being necessary. The rising cost of electricity and fuels and, above all, the change in the framework of the regulation of the allocation of emission rights to try to combat the effects of climate change, call for the closure of many comprehensive cement plants, which will be installed in developing countries in which the legislation will not be as strict as in Europe, and where sales volumes and the price of cement provide strong economic profits, thereby beginning a strategy for divestment in Europe and moving production to third countries.

The destruction of the productive fabric, due to these three combined factors: Increase in fuel and electricity prices, increase in price due to the emission of greenhouse gases, drop in the volume of cement sales; these seem to be leading the sector to the definitive closure of its facilities in Europe.

At the same time, due to social and administrative pressure, with the application of more rigorous environmental control laws, factories have had to make heavy investments to control their emissions: channelled particles (bag filters), SO₂ (spray dryer), NOx (SCNR), fugitive particles (ships, windbreak screens, belt closures, ...), continuous measurement equipment. Concern for these issues related to health and well-being cannot reduce the level of demand that Administrations must demand from the industry, so in the coming years these demands will increase.

Furthermore, the inherent characteristics of cement manufacturing processes that require the handling of pulverulent materials, and the criticisms of environmental groups against the waste recovery processes, mean that cement factories are poorly perceived among many sectors of the population, affected in one way or another by the operation of these facilities. Above all, by those who have not adapted their assets to the new social needs due to lack of profitability, which in recent years resulted in a significant drop in the level of investment needed for proper maintenance of facilities, processes, teams and human capital.

Despite everything, modern society poses additional challenges to industrial sectors:
- Significant reduction of greenhouse gas emissions to fight against climate change,
- Improvement in pollutant gas treatment systems, through transparent systems, duly explained to the public,
- Modification of the energy model: Increase in the production of electrical energy to provide service for the technological change involved in the transition from the combustion engine to the electric motor of the vehicle fleet,
- Processes for the management of generated waste,
- Safety and reliability of production systems,
- Preservation of resources through recycling policies,
- And also, production of cement for the manufacture of the concrete necessary for the maintenance and improvement of housing and infrastructures.

The cement industry has a large presence all around the world. Thus, while there are plant closures in developed countries that no longer need so much cement, these same countries demand more electrical power and produce more waste, which means that systems are needed for the production of this electricity and investments should be made in facilities for proper waste management. Moreover, in the rest of the world, many developing countries need their cities to be urbanized, which requires a large amount of cement, forcing them to create factories in which this construction element is produced in a different manner than that admissible to date, reducing emissions of greenhouse gases and other environmental pollutants to avoid climate change and the pollution of the planet.

### DESCRIPTION OF THE INVENTION

The idea is based on establishing a gas purge: cold bypass, to the outlet of the heat exchange tower (gas direction) similar to that which exists to remove chlorine in many current cement installations (chlorine bypass: and extraction of gases at the inlet of the heat exchange tower (gas direction)).

To perform this gas purge, the installation of two crude mills with a similar production capacity it proposed, about 2% above and below the flow of crude fed to the clinker kiln. In this manner, at all times one of the mills will always be in operation while the other is stopped ready for maintenance and revision operations. The differences in the feed flow rate of the kiln with respect to the production of the mills will cause an increase or decrease in the level of the crude silos that acts as an element of homogenization and lung. This modification will make the so-called direct operation disappear, but will result in an excess of very hot gases (about 25% of the total at a temperature above 360ºC), gases which are very concentrated with volatile elements. To waste the least amount of crude, the crude carried by these gases will be captured by multicyclones (with an efficiency of 80-90%), achieving the separation of the crude and the volatile compounds. The separated crude in multicyclones can return to the volatile-free clinker kiln, keeping them in the gas stream, which is subjected to a cooling process followed by a process of injection of activated carbon (or other adsorbent elements) to achieve adsorption of the compounds volatile. Active carbon is subsequently captured in bag filters and sent to controlled spillways, leaving the gases free of polluting elements. Thanks to this cold purge, the emission of volatile compounds, also chlorine, is avoided both through the cold bypass current and the current that passes through the crude mills, since the global concentration of the gases in no moment is increased by recirculation phenomena.

This idea, which, in principle, could be considered more expensive—as a second crude mill and a team of multicyclones may have to be installed-is not so much so, when one considers that:
- some of the equipment of the two crude milling facilities can be shared, so it is not necessary to duplicate them,
- mills and other equipment for milling facilities are smaller than would be necessary if only one mill were set up,
- the crude silo for clinker production does not need to be so large,
- it is not necessary to build a gas conditioning tower.

Regarding this last statement, it is necessary to note that the purge hot gases bypass the crude mills and could be employed by using their energy in different processes:
- drying of vegetable matter that would later be used as fuel,
- residual organic matter pyrolysis processes,
- or mixing it with the chlorine bypass gases from the cement processes as an initial quenching of these streams to unify the purification facilities of both purge processes.

In short, with this purged gas at the outlet of the heat exchanger of the clinker manufacturing processes (gas direction), the volatile substances can be removed from the recirculation process described for the usual facilities: *condensation and adsorption of volatile substances on the raw material introduced into the crude mill; desorption and volatilization of volatile compounds from the raw material when it is introduced into the kiln;* capturing these volatile compounds in activated carbon adsorption facilities much smaller than those that would be necessary for the treatment of gases during the direct operation of the usual factories in order to avoid volatile emissions during these periods of operation in the which the emission values of these pollutants established by environmental legislation are normally exceeded.

An alternative that can be used in installations with a single crude mill would be to send the CKD in which are adsorbed a large amount of volatile substances (also chlorine), to heating facilities in which the temperature is raised for the evaporation of the volatile substances adsorbed in the CKD, passing them to another, smaller gas stream to be subjected to a cooling process, for subsequent condensation of volatile contaminants over other adsorbents elements (wet limestone, active carbon, activated Biochar) using much smaller equipment since the gas flow rate is much lower. This process would significantly reduce the amount of volatile substances accumulated during the recirculation process that occurs during the mixed operation of the clinker manufacturing processes, and which are emitted during direct operation, exceeding the ELV.

### BRIEF DESCRIPTION OF THE DRAWINGS

For a better understanding of what has been described in the present specification, some drawings are attached in which, only by way of example, the basic concept of operation and arrangement of the process is represented, as well as the different auxiliary elements that could be added for the optimization thereof.

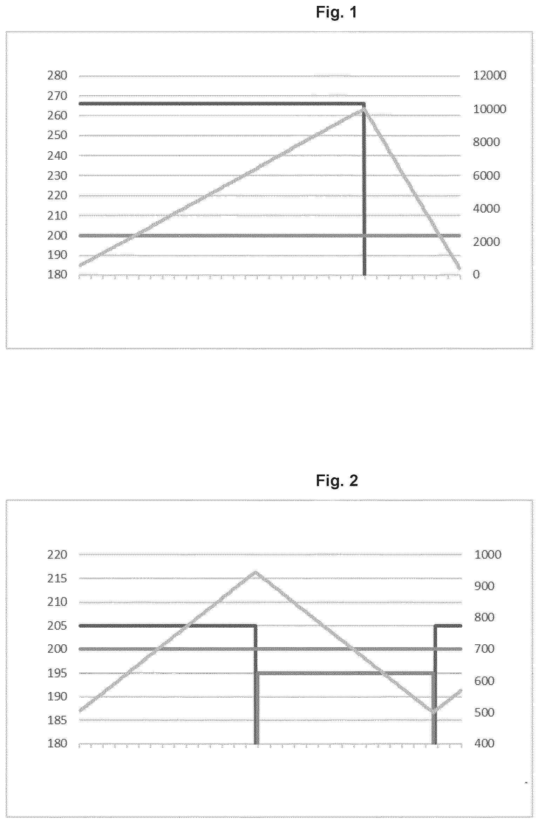

In **Figure 1****,** the evolution of the level of the crude silo (tonnes) (yellow line) (axis of secondary ordinates (to the right)) is shown as a function of time (abscissa axis) in the case of operating with a single crude mill with levels of production (tonnes/hour) (blue line) (main axis of ordinates (to the left)) substantially higher than the crude consumption in the kiln (tonnes/hour) (grey line) (main axis of ordinates (to the left)), which implies that it is necessary to stop it about 25% of the time (direct operation). This is the usual process of operation of cement clinker manufacturing facilities, wherein there exists only one crude mill.

In **Figure 2****,** the evolution of the level of the crude silo (tonnes) (yellow line) (axis of secondary ordinates (to the right)) is shown as a function of time (abscissa axis) in the case of operating two crude mills with levels of production (tonnes/hour) (blue and red lines) (main axis of ordinates (to the left)) slightly higher and lower than the consumption of crude in the kiln (tonnes/hour) (grey line) (axis of main ordinates (to the left)). Taken to the extreme where all productions and consumptions were equal, it might not even be necessary to build a crude silo.

Comparing both figures, the evolution of the level in the crude silos is observed depending on the two situations described. The greater production of the crude mill is observed when there is only one mill, as well as the need for a much larger crude silo to be able to operate 75% of the time in mixed operation, reserving 25% of the time for maintenance operations and revision. In the case of the existence of 2 crude mills, each one has 50% of the operating time to be able to carry out maintenance and revision operations, even, if necessary, it would be possible to force the variation in the production of just one of them, while a repair operation was being carried out with the other, without the need to stop the kiln, at the cost of a greater demand on the operation of the other mill. Additionally, it is of interest that for the same operating time the variation of crude stored in the crude silo only varies between 500 and 950 t, while, in the case of a single crude mill, the silo in which to store this material varies between 500 and 10,500 t, which necessarily requires the investment of a much larger silo to allow the operation of the process.

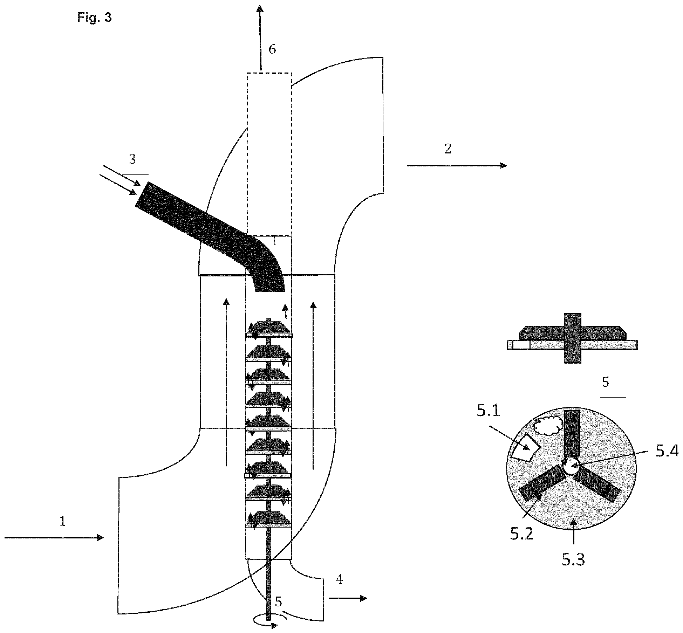

In **Figure 3** is shown one Desorption unit of volatile substances contained in the crude captured by the end of line filters of the cement processes. The heat used for volatilization can be that contained in any process stream with sufficient temperature. Ideally, the gas from the traditional chlorine purge (chlorine bypass), before being cooled in the quenching process, can be used to provide the necessary heat. These units are made up of:
(1) Inlet of the hot gas stream (temperature around 800ºC), coming from the chlorine bypass or from another heat source.
(2) Exit of the stream of hot gases cooled by the CKD.
(3) Entry of CKD with volatile substances.
(4) CKD outlet without volatile substances.
(5) CKD turning system to allow the retention of the CKD and increases the volatilization of the adsorbed compounds: Succession of fixed plates (5.3) with a through hole (5.1) towards the lower level, plus an axis (5.4) with blades (5.2) that rotate to move the CKD along the fixed plate, increasing the residence time of the CKD in the desorption equipment, allowing the transfer of heat and the volatilization of the volatile compounds captured in the CKD.
(6) Exit of volatile substances from the CKD. These compounds can bind to the hot gas stream exit (2) in the event that the stream comes from the chlorine bypass or have their independent path to the cooling and volatile substance capture system on adsorbent elements.

In **Figure 4****,** the diagram of an comprehensive cement factory with one crude mill is presented.

In **Figure 5****,** the diagram of an integrated cement plant with a single crude mill to which has been added a chlorine bypass is presented.

In **Figure 6****,** the diagram of an comprehensive cement plant with a chlorine bypass is presented, which has been replaced with the crude mill by two smaller mills to release a portion of gas for performing a purge of light volatile substances, which have been sent to the chlorine bypass quenching units. Additionally, the unit for the desorption of volatile substances accumulated in the CKD dust captured by the end-of-line filter is included.

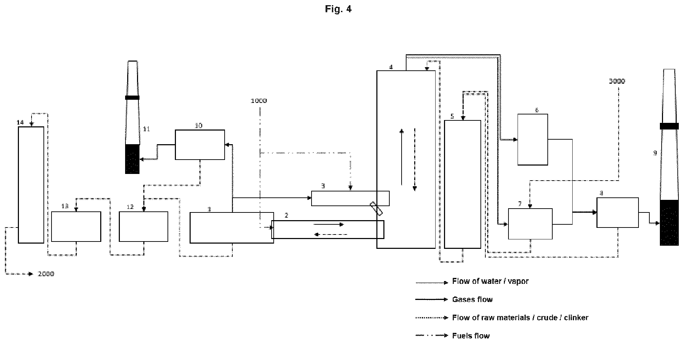

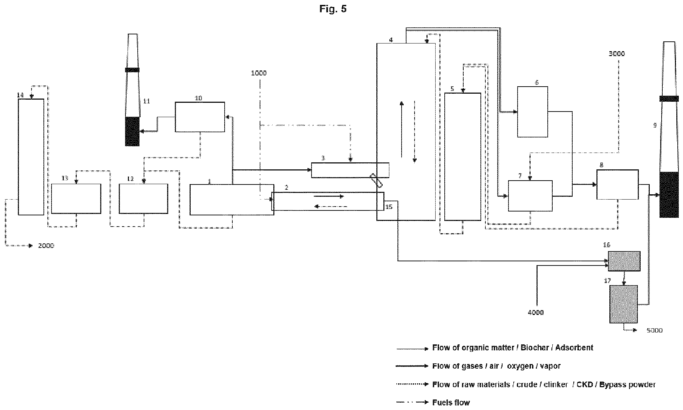

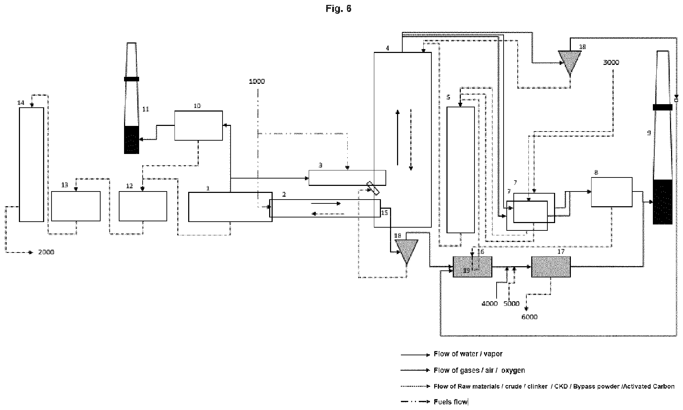

Gas and liquid pipes and flow tubes, belts, elevators or other units used for the movement of solids connecting the units of the diagrams of Figures 4, 5 and 6, through which the different types of materials of the cement process circulate are represented according to the following code:
- Solid lines correspond to flows of gases/air/oxygen.
- Dotted lines correspond to water/vapor flows.
- Lines made up of dash and dot correspond to solid material flows: raw materials, crude, clinker, CKD powder, Bypass powder or active carbon injection or any appropriate adsorbent.
- Lines made up of a dash and a colon correspond to the flow of fuels.

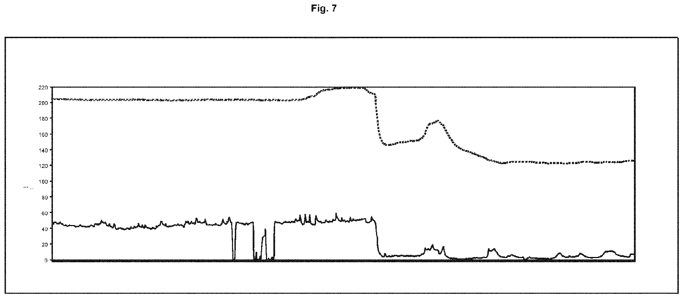

In **Figure 7****,** you can see the evolution as a function of time (abscissa axis) of NH₃ emissions (mg/Nm³ bs 10%O₂) (solid line) depending on whether the process is in mixed operation or direct operation, situations that are distinguished by temperature (ºC) (dashed line). It can be seen that emissions in mixed operation (gas temperature around 140ºC) is approximately 10 mg/Nm³ bs 10%O₂, while in direct operation (gas temperature around 200ºC) NH₃ emissions rise to 50 mg/Nm³ bs 10%O₂. Other compounds with volatility similar to that of NH₃ (Hg, Cd, TI, IAI, etc.) have a similar evolution.

### DESCRIPTION OF A PREFERRED EMBODIMENT

The ways in which this model can be applied vary depending on the various configurations of the specific cement factory and the level of investment desired to be undertaken to renovate an existing installation.

In general, it should be considered that all cement processes consist of a raw material inlet (3000), fuel inlets (1000) and a cement outlet for dispatch (2000).

### The basic cement clinker manufacturing line would be:

The clinker manufacturing line can be any production line commonly installed in the world. Although factories can have very varied configurations, the most common would be for them to contain the elements described in figure 4 (the model, number and size of each installed unit depends on the degree of innovation of each installation):
(1) **Clinker cooler:** The hot clinker (1,450ºC) that falls into this equipment from the kiln (2) is cooled with atmospheric air supplied by fans. The hot gases generated in the cooling process are used as secondary air for the combustion of the fuel (1000) used in the kiln itself (2) or the precalciner (3). The excess air is taken to the filter (10) thanks to the depression generated in the circuit by fans located appropriately throughout the process.
(2) **Clinker kiln:** In this equipment the crude (mixed and ground raw material) from the exchange tower (4) reaches the necessary temperature for clinker reactions to take place (~ 1,450ºC). Part of the hot air produced in the cooler (1) (1,100ºC) is used as secondary air for the combustion of different types of fuels fed through a suitable existing burner.
(3) **Precalciner:** Element in which additional combustion is carried out, reducing the combustion that takes place in the kiln (2). It is possible to reduce the thermal load of the combustion of the kiln burner (less NOx), to burn other types of fuels, to reduce heat losses in the kiln, as well as to provide stability to the entire production process. The heat generated in the precalciner is used to decarbonize the limestone and dehumidify, producing the union of the hot gas streams generated in the precalciner with the crude coming from the heat exchange tower (4). For the combustion of the supplied fuel, the hot air from the cooler (1) is used as oxidizer.
   The more modern the line in which to apply the invention, the efficiency of the system can be improved, so it is advisable to install this precalciner attached to the heat exchange tower (4), although this element is not essential. The amount of fuel to be injected into the precalciner must be adequate to promote complete combustion of all the fuel, taking into account the amount of oxygen actually available, ensuring an adequate residence time at high temperature for all combustion gases for complete destruction of complex organic compounds (T>850ºC for more than 2").
(4) **Heat exchange tower:** There are a great variety of designs. In general, it is a series of cyclones in which counter current heat exchange occurs between the descending crude conveniently dosed in the upper cyclones of the exchange tower from the crude silo (5), with the rising heat of the combustion gases from the kiln (2) and the precalciner (3). In this unit the temperature of the raw material is raised to approximately 900ºC, producing dehumidification and decarbonization of the limestone.
(5) **Crude silo:** To store and homogenize the finely ground raw materials from the crude mill (7) for subsequent dosing to the system through the heat exchange tower (4) depending on the level of production to be fixed.
(6) **Gas conditioning tower:** Unit necessary to lower the temperature of the exit gases from the heat exchange tower (4), before passing to the filter (8) in the event that the crude mill (7) is still.
(7) **Crude mill:** Unit necessary to mix, dry and grind the different types of raw materials (3000) that are joined to form a fine or raw material with the necessary composition to store in the crude silo (5) before supply to the rest of the process.
(8) **Final filter of the line of the crude kiln** - **mill system:** Filter to remove particles accompanying the gas stream outlet from the gas conditioning tower (6) or the crude mill (7). The captured fine particles, called CKD, are usually stored in the crude silo (5), although it is also possible to send them to the cement mill (13).
(9) **Chimney:** To emit and diffuse the exhaust gases of the combustion process after the particles are eliminated by the filter (8).
(10) **Final filter of the line of the clinker cooling process:** Filter to remove particles that accompany the outlet air stream of the clinker cooler (1), which has not been used as secondary air in the kiln (2) or tertiary in the precalciner (3). The fine particles captured are sent to the clinker warehouse (12). The filter may include an air-cooling system to lower the air temperature of the clinker cooler (1) in order to protect the filter sleeves. At the outlet of this filter there is a fan that pulls the gases to maintain the pressure in the kiln head at around 1 atm.
(11) **Chimney:** To emit and spread the surplus air from the outlet of the clinker cooling process (1), which pass through the final filter of the line of the clinker cooling process (10).
(12) **Clinker warehouse:** Storage of the clinker formed in the kiln (2) after being cooled in the clinker cooler (1), as well as the fine clinker collected in the filter (10).
(13) **Cement mill:** Equipment necessary to grind the clinker accumulated in the clinker warehouse (12) with gypsum and other materials (fly ash, blast kiln slag, CKD, etc.) to form the different types of cements (2000) that are produced in the plant.
(14) **Silos, bagging machines and other dispatch systems:** To store the cements produced in the cement mill in different formats (13) until they are sold.
   To this basic configuration, in installations with chlorine problems, the chlorine bypass is added, consisting of a gas extraction in the entrance to the heat exchange tower (gas direction) (4). That line is made up of several elements:
(15) **Hot gas extraction point:** At the entrance to the heat exchange tower (gas direction) (4) near the clinker kiln (2), an area with a high concentration of chlorine in a gaseous state, making it the ideal point to extract gases in order to purge the system of the presence of chlorine, an element in which the process is enriched due to recirculation phenomena, and which ends up causing sticking problems in the heat exchange tower (4).
(16) **Quenching:** The cooling unit of the very hot gases (900ºC) and usually very rich in chlorine extracted from the process at the point of extraction of hot gases (15). Ambient air is used to cool these gases (4000).
(17) **Filter of the chlorine bypass:** filter to remove chlorine-rich particles accompanying the quenching outlet gas stream (16). At the outlet of this filter, there is a fan that pulls the gases. The fine particles captured called Bypass powder (5000) are sent to the spillway, although other options that can be applied for treatment and integration into the ecosystem. Quenching (16) and filter (17) are not essential for clinker production processes, although, due to the large amount of fuels derived from waste with a high chlorine content that are used, in order to avoid problems of chlorine recirculation phenomena (bondings and stops), is a useful element that will be increasingly necessary to proceed with the installation as it is a very effective solution for controlling bondings and stops.

This cement clinker production system can undergo the improvements proposed in this document for which recognition is requested as an invention patent.

### Volatile Materials Purge (Cold Bypass):

The following modifications are made to the installation defined with the presence of the chlorine bypass:
- The gas conditioning tower (6) is cancelled.
- The crude mill is replaced by two crude mills (7) with the same production capacity as the kiln crude feed. This generates a stream of excess hot gases at the outlet of the heat exchange tower (gas direction) (4), rich in volatile elements, which is the cold bypass purge stream.
- The clean gases of particles from the cold bypass and chlorine bypass streams are led to the quenching (16) in which the streams are unified at the same time that a first quenching is carried out to the chlorine bypass.
- Likewise, the inclusion of the following units should be considered:
   (18) **Multicyclone:** High speed cyclones for the separation of particles from the hot gas stream (around 360ºC) to be installed in the cold bypass purge just at the outlet of the heat exchange tower (gas direction) (4) (80-90% separation efficiency). Optionally you can place another multicyclone in the chlorine bypass gas before the quenching (16).
   (19) **Unit for the desorption of volatile substances:** To a stream of gases with high temperature (for example, in the chlorine bypass gases) can be fitted a unit for the removal of volatile substances accumulated in the CKD. In facilities that cannot allow the replacement of a crude mill with two mills of the same production to release a surplus of gases with which to purge the volatile substances system, only this volatile desorption equipment can be established to purge captured volatile substances in the CKD, decreasing the concentration of these volatile elements in the gas stream of the clinker manufacturing process, reducing in this manner volatile substance emissions occurring during direct operation. If the installation does not have a chlorine bypass, a hot source must be established to volatilize the volatile compounds captured in the CKD.
      One way or another, it is possible to drive the volatile substances to a flow of gases with a lower flow rate and a higher concentration of volatile elements, where they will be finally captured.
   (20) **Volatile capture system:** In any case, to perform the final capture of the volatile compounds, the gas purge stream must be definitively cooled by injecting cold air, water or any other cooling system (4000), and the injection of an adsorbent element (active carbon, wet limestone, activated Biochar, etc.) (5000) on which the volatile elements will be adsorbed. These adsorbent elements are separated from the gas stream by means of an end-of-line filter (17). The resulting solid product, a mixture of adsorbent and crude (6000) must be inerted and deposited in a spillway.

As a summary, it is possible to reduce the volatile (also chlorine) recirculation phenomena, allowing a lower emission of these elements during the direct operation of the clinker manufacturing processes. Likewise, the amount of wasted crude that must be taken to the spillway is reduced (thanks to the presence of multicyclones (18)). The volatile substance purification units are smaller (sometimes they are the same as those necessary to establish the traditional chlorine purge), so the need for investment is less than if you chose to establish a system for capturing volatile substances with active carbon or another adsorbent element at the end of the line of the clinker manufacturing process during direct operation. The operating costs are also lower since the needs of adsorbent elements are lower when dealing with smaller gas flows and concentrated in volatile substances than the end-of-line gases of the clinker manufacturing process during direct operation.

## Claims

1. Control of volatile substances in cement clinker manufacturing processes adapted to clinker manufacturing processes without chlorine bypass, comprising:
- Installation of two crude mills (7) each with a production similar to the amount of crude needed to feed said clinker kiln, with the aim of releasing an excess gas stream used as a volatile purge (cold bypass).
- Elimination of cold bypass particles by means of high efficiency multicyclones (18).
- Volatile capture system (20): cooling and injection of adsorbent from the gas purge streams (cold bypass), for the adsorption of volatile elements (chlorine included) on the injected adsorbent.

2. Control of volatile substances in cement clinker manufacturing processes (cold bypass) according to claim 1, in a factory in which there is a chlorine bypass, which comprises:
- Add high efficiency multicyclones (18) for the elimination of the particles of the chlorine bypass.
- Volatile purges linking with chlorine bypass gases in a first cooling (quenching) (16) of the chlorine bypass gases, prior to the cooling system and adsorbent injection (20) described in claim 1.

3. Volatile substance control in cement clinker manufacturing processes adapted to clinker manufacturing processes (with a single crude mill) without the possibility of extracting a gas purge stream, comprising:
- High efficiency multicyclones (18) for the elimination of the chlorine bypass particles.
- Sending the CKD dust captured by the end-of-line filter of the usual cement clinker manufacturing process, to a volatile desorption unit (19) in which the chlorine bypass gases provide the heat necessary for evaporation of the volatile elements of the CKD, reducing the concentration of volatile elements that recirculate, decreasing, therefore, the concentration of said volatile compounds in the clinker cement manufacturing system.
- Volatile elements linking evaporated in the volatile desorption unit (19) with the chlorine bypass gases prior to the cooling system (quenching) and adsorbent injection (20) for the adsorption of volatile elements and also chlorine on the injected adsorbent.

4. Control of volatile substances in cement clinker manufacturing processes adapted to clinker manufacturing processes (with a single crude mill) without the possibility of extracting a gas purge stream, and without chlorine bypass, comprising:
- Sending the CKD dust captured by the end-of-line filter of the usual cement clinker manufacturing process, to a volatile desorption unit (19) in which an electrical resistance or the extraction of hot gases from the manufacturing process, provides the necessary heat for the evaporation of the volatile elements of the CKD, reducing the concentration of volatile elements that recirculate, thus reducing the concentration of said volatile compounds in the cement clinker manufacturing system.
- Adsorbent cooling and injection system (20) of the volatilized gas stream of the CKD, which is used for adsorption of volatile elements on the injected adsorbent (in addition to volatile substances in the CKD, there is also chlorine deposited.
